# EUROPEAN PATENT APPLICATION

(11) **EP 2 869 597 A2**
(43) Date of publication of application: **06.05.2015**
(21) Application number: 14191358.2
(22) Date of filing: 31.10.2014
(51) Int. Cl.: H04R 17/00, H04B 1/38, H04M 1/02, H02J 7/00

(54) **Sound amplification box and sound amplification device including the same**

(30) Priority: 01.11.2013 KR 20130131938; 13.06.2014 KR 20140072030
(71) Applicant: Innochips Technology Co., Ltd., Gyeonggi-Do 425-852 (KR)
(72) Inventor: Park, In Kil, Seongnam-Si (KR); Noh, Tae Hyung, Siheung-Si (KR); Park, Sung Cheol, Ansan-Si (KR); Kim, Young Sul, Seoul (KR); Choi, Soon Dong, Siheung-Si (KR); Jung, In Seob, Ansan-Si (KR); Park, Wan, Ansan-Si (KR)
(74) Representative: Michalski Hüttermann & Partner Patentanwälte mbB

(57) **Abstract**

Provided are a sound amplification box and a sound amplification device. The sound amplification box includes a body including a predetermined resonance space therein and having a surface contacting an electronic device, a resonance hole formed in at least one surface of the body, and a vibration transmission part in a predetermined region of the surface contacting the electronic device.

## Description

### [Technical Field]

The present disclosure relates to a sound amplification box, and more particularly, to a sound amplification box that amplifies a sound generated from an electronic device, without using separate electric power.

### [Background Art]

Smart devices such as smart phones and tablet PCs, which are portable and perform various functions using application programs, are increasingly used. For example, smart devices may be used to listen to music, watch moving images, play games, and surf the Internet. In particular, multimedia functions such as listening to music and watching moving images are the most popular functions of smart devices.

However, since a sound generated from a speaker installed in portable devices such as smart devices is small, an earphone or a silent indoor space is needed to use multimedia functions.

To address this issue, portable speakers having a relatively large volume may be used. However, such portable speakers are too heavy and large to carry. Typical portable speakers need a sound board, and thus, have a large volume. That is, since an amplification amount of a sound is proportional to the size of a sound board, and a sound quality affected by vibrations depends on the intensity and size of a permanent magnet for vibrating the sound board, the volume of portable speakers increases. In addition, portable speakers need separate electric power, and thus, also need a power supply source.

Korean Patent Registration No. 10-119861 discloses a smart phone speaker that does not need separate electric power.

### [Disclosure]

### [Technical Problem]

The present disclosure provides a sound amplification box that amplifies a sound generated from an electronic device, without using separate electric power.

The present disclosure also provides a sound amplification box that amplifies a vibration generated from an electronic device to amplify a sound generated from the electronic device.

The present disclosure also provides a sound amplification device which primarily amplifies a sound generated from an electronic device, by using a portable piezoelectric speaker removably coupled to the electronic device, and which secondarily amplifies the sound by bringing the electronic device coupled with the portable piezoelectric speaker into contact with a sound amplification box.

### [Technical Solution]

In accordance with an exemplary embodiment, a sound amplification box includes: a body including a predetermined resonance space therein and having a surface contacting an electronic device; and a resonance hole formed in at least one surface of the body.

The body may include: an upper plate contacting the electronic device, wherein the electronic device is placed on the upper plate; a lower plate spaced a predetermined distance from the upper plate and facing the upper plate; and at least one side wall plate disposed at an edge of the upper plate and the lower plate.

The upper plate, the lower plate, and the at least one side wall plate may be removably coupled to one another.

Joining parts may be provided in predetermined regions of sides of the upper plate, the lower plate, and the side wall plate, and be coupled to one another.

The joining parts may include at least one of protrusion parts protruding from the sides, recess parts recessed in the sides, and uneven parts in which the protrusion parts and the recess parts are repeatedly formed.

The side wall plate may be provided in plurality such that the side wall plates extend from the lower plate and are foldable, and one of the side wall plates is foldable with the upper plate.

The upper plate may have a side on which the side wall plate is foldable, and another side opposite to the first side, and an outer plate may be disposed on the second side and is foldable.

The outer plate may cover the side wall plate connected to a side of the lower plate, from an outside of the side wall plate, and a magnet may be disposed in a predetermined region of a contact surface between the side wall plate and the outer plate.

The side wall plate may be provided in plurality such that the side wall plates extend from the lower plate and are foldable, and two of the side wall plates are foldable with the upper plate.

The resonance hole may be formed in the lower plate.

The sound amplification box may further include a vibration transmission part in a predetermined region of the upper plate.

The sound amplification box may further include a support part in a predetermined region of the lower plate.

The upper plate may be formed of a material that is different from materials for the lower plate and the side wall plates.

At least the upper plate may have a sandwich shape in which pulp is adhered to upper and lower parts of a polymer, wherein the polymer has a density ranging from approximately 10.0 kg/m² to 20.0 kg/m² and/or a modulus of elasticity ranging from approximately 2500×10⁶ N/m² to 3500×10⁶ N/m² According to a preferred embodiment of the present invention, the pulp has a density ranging from approximately 100 kg/m² to 300 kg/m² and/or a modulus of elasticity ranging from approximately 100×10⁶ N/m² to 200×10⁶ N/m².

In accordance with another exemplary embodiment, a sound amplification device includes: a portable piezoelectric speaker coupled to a rear surface of an electronic device to primarily amplify a sound source output from the electronic device; and a sound amplification box including a predetermined resonance space therein and having a surface contacting the electronic device to secondarily amplify the sound source primarily amplified at the portable piezoelectric speaker.

The portable piezoelectric speaker may be coupled to the rear surface of the electronic device.

The portable piezoelectric speaker may include: a body removably coupled to the rear surface of the electronic device; and a piezoelectric speaker module joined to a predetermined region of the body, wherein the piezoelectric speaker module includes a piezoelectric device, and a vibration transmitting body contacting at least one region of the piezoelectric device and spaced apart from at least one surface of the piezoelectric device.

The sound amplification box may include: an upper plate contacting the electronic device, wherein the electronic device is placed on the upper plate; a lower plate spaced a predetermined distance from the upper plate and facing the upper plate; and at least one side wall plate disposed at an edge of the upper plate and the lower plate.

A resonance hole may be formed in the lower plate.

The sound amplification device may further include a vibration transmission part in a predetermined region of the upper plate.

The sound amplification device may further include a support part in a predetermined region of the lower plate.

### [Advantageous Effects]

In accordance with embodiments, a sound amplification box includes a body including a predetermined resonance space therein, and a resonance hole formed in at least one surface of the body, and a portable electronic device coupled with a contact type piezoelectric speaker is brought into contact with an upper surface of the body, so that the contact type piezoelectric speaker can primarily amplify a sound generated from the portable electronic device, and the sound amplification box can secondarily amplify the primarily amplified sound. Thus, the sound generated from the portable electronic device is amplified without separate electric power and a separate speaker device.

In addition, the sound amplification box is removably coupled to an object, and thus, portability of the sound amplification box can be improved.

### [Description of Drawings]

Exemplary embodiments can be understood in more detail from the following description taken in conjunction with the accompanying drawings, in which:
FIGS. 1 to 3 are schematic views illustrating a sound amplification box in accordance with an exemplary embodiment;
FIG. 4 is a graph showing data measured using a sound amplification box in accordance with another exemplary embodiment;
FIGS. 5 and 6 are schematic views illustrating a sound amplification box in accordance with another exemplary embodiment;
FIGS. 7 and 8 are schematic views illustrating a sound amplification box in accordance with another exemplary embodiment;
FIGS. 9 to 13 are schematic views illustrating a sound amplification box in accordance with another exemplary embodiment;
FIGS. 14 to 16 are schematic views illustrating a sound amplification box in accordance with another exemplary embodiment;
FIGS. 18 to 20 are schematic views illustrating a portable piezoelectric speaker according another exemplary embodiment; and
FIGS. 21A to 24 are schematic views illustrating portable piezoelectric speakers according other exemplary embodiments.

### [Mode for Invention]

Hereinafter, specific embodiments will be described in detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art.

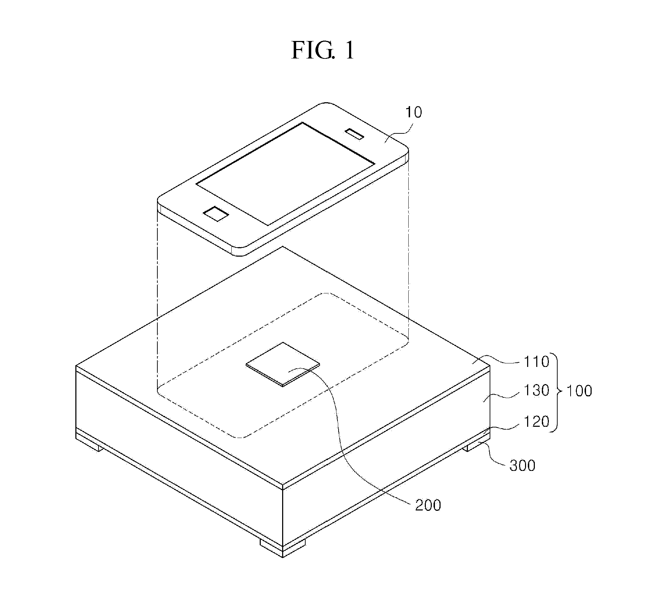

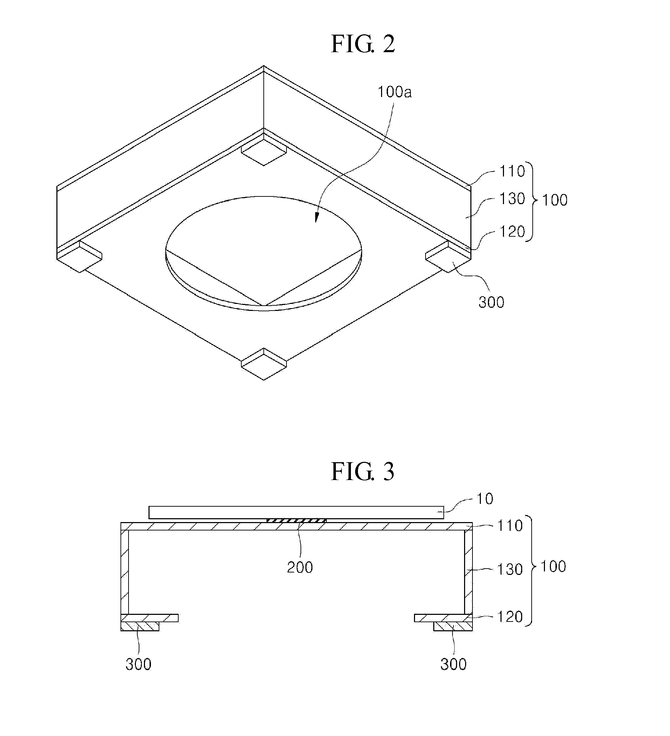

FIG. 1 is a perspective view illustrating a sound amplification box in accordance with an exemplary embodiment. FIG. 2 is a perspective view illustrating the bottom of the sound amplification box in accordance with the current embodiment. FIG. 3 is a cross-sectional view illustrating the sound amplification box in accordance with the current embodiment.

Referring to FIGS. 1 to 3, a sound amplification box in accordance with the current embodiment may include a body 100 having a predetermined space therein. Further the sound amplification box may include a vibration transmission part 200 on a surface of the body 100, and support parts 300 on another surface of the body 100. That is, the sound amplification box may be constituted by only the body 100 having the predetermined space therein, without the vibration transmission part 200 and the support parts 300.

The body 100 includes an upper plate 110 and a lower plate 120, which have an approximately rectangular shape, and a plurality of side wall plates 130 disposed between the upper plate 110 and the lower plate 120 at edges thereof and having an approximately rectangular shape. That is, the upper plate 110 and the lower plate 120 face each other, and four side wall plates 130 are disposed between the upper plate 110 and the lower plate 120 at the edges thereof Thus, the body 100 may have an approximately hexahedral shape. The upper plate 110 may be defined as a surface on which an electronic device 10 including a portable terminal such as a smart phone is placed, and the lower plate 120 may be defined as a surface opposite to the upper plate 110 and facing a ground. The upper plate 110 may have a size greater than a size of the electronic device 10. Accordingly, the electronic device 10 may be placed on the upper plate 110 such that a surface of the electronic device 10 contacts the upper plate 110. The lower plate 120 may be the same as the upper plate 110, in terms of size and shape. Since the body 100 has an approximately hexahedral shape, the body 100 has a predetermined resonance space therein. The body 100 may have one of various three-dimensional structures such as a cylindrical shape and a polyhedral shape. For example, each of the upper plate 110 and the lower plate 120 may have a circular shape, and the side wall plates 130 may have a strip shape at the edges between the upper plate 110 and the lower plate 120. Accordingly, the body 100 may have a cylindrical shape. A resonance hole 100a having a predetermined size may be disposed in a predetermined region of the lower plate 120. Inner air of the body 100 may be discharged to the outside thereof through the resonance hole 100a. Thus, even when the electronic device 10 has a small output, a sound volume may be sufficiently amplified, and a low sound may be clearly heard. For example, the resonance hole 100a may have a circular shape, but is not limited thereto. That is, the resonance hole 100a may have an oval shape or a polygonal shape such as a tetragonal shape or a pentagonal shape. The resonance hole 100a may be provided in plurality. For example, the resonance hole 100a may be disposed in a central region of the lower plate 120, and two or more of the resonance holes 100a may be disposed in two or more regions of the lower plate 120. One or more of the resonance holes 100a may be disposed in one or more of the side wall plates 130 as well as the lower plate 120. The size of the resonance hole 100a may be adjusted according to a volume of the body 100 and an amplification amount of a sound. For example, when the resonance hole 100a is formed in the lower plate 120, the resonance hole 100a may have an area that ranges 10 to 80% of an area of the lower plate 120. As the area of the resonance hole 100a decreases, a range of frequencies to be amplified decreases. As the area of the resonance hole 100a increases, the range of the frequencies to be amplified increases. For example, when the resonance hole 100a has a first area, a frequency ranging from 1 kHz to 1.5 kHz may be amplified. In addition, when the resonance hole 100a has a second area greater than the first area, a frequency ranging from 800 Hz to 2 kHz may be amplified. In addition, as the area of the resonance hole 100a increases, an increase amount of a sound pressure decreases. That is, an increase amount of the sound pressure in a case where the resonance hole 100a has the second area greater than the first area is smaller than an increase amount of the sound pressure in a case where the resonance hole 100a has the first area. The body 100 may be formed of a hard material having excellent vibration transmission characteristics. When the body 100 is excessively lightweight, the body 100 may be excessively sounded, and thus, a sound output from the body 100 may be unclear. In addition, when the body 100 is excessively hard and heavy, a sound output from the body 100 may be unnatural. Thus, a material for the body 100 may be selected considering the volume of the body 100. In addition, when the volume of the body 100 is fixed, a hard and heavy material may be used to form the body 100. For example, the body 100 may be formed of hardwood, glued laminated wood, pulp, paper, medium density fiberboard (MDF), metal, or plastic.

The vibration transmission part 200 may be disposed in a predetermined region on the upper plate 110 of the body 100. For example, the vibration transmission part 200 may be disposed in a central region of the upper plate 110 and contact the electronic device 10. The vibration transmission part 200 may be formed of a material different from a material for the body 100, and transmits a vibration output from the electronic device 10 to an inner vibration space of the body 100. A sound from the electronic device 10, that is, a vibration from the electronic device 10 can be transmitted to the inside of the body 100, without using the vibration transmission part 200. However, the vibration may be more efficiently transmitted by the vibration transmission part 200. Furthermore, the vibration transmission part 200 may reduce a secondary noise and fix the electronic device 10. To this end, the vibration transmission part 200 may be formed of, e.g., silicone having excellent elasticity, or ethylene-vinyl acetate copolymer (EVA). Thus, force for bringing the electronic device 10 into tight contact with the vibration transmission part 200 is increased to effectively transmit the vibration from the electronic device 10 to the body 100, and the electronic device 10 is stably held by reducing a slip thereof. An outer surface of the vibration transmission part 200 may be higher than an outer surface of the upper plate 110 of the body 100. That is, the vibration transmission part 200 may be disposed on the outer surface of the upper plate 110 to protrude from the upper plate 110. The vibration transmission part 200 may be embedded in a recess having a predetermined depth in the upper plate 110.

The support parts 300 may be disposed in predetermined regions of the lower plate 120, e.g., at four corners of the lower plate 120. That is, the support parts 300 may be disposed at the inside of regions contacting the side wall plates 130. The support parts 300 prevent the lower plate 120 from contacting the ground. That is, the support parts 300 may form a space between the lower plate 120 and the ground to allow an efficient air flow through the resonance hole 100a, and provide a secondary resonance space between the lower plate 120 and the ground. The support parts 300 may be formed of rubber or foam to prevent a shake or a slip of the body 100.

At least the upper plate 110 of the body 100 of the sound amplification box may be formed of a material having appropriate elasticity. That is, since the upper plate 110 directly contacts the electronic device 10 and functions as a diaphragm for transmitting a vibration from the electronic device 10, the upper plate 110 may be formed of a material having appropriate elasticity. Although a high Young's modulus is needed to obtain a high output by changing a material for the upper plate 110, a low modulus of elasticity is needed to obtain uniform frequency characteristics. When the material for the upper plate 110 has great elastic force, the material increases a sound pressure, but increases (emphasizes) an output of a specific frequency, thereby degrading the uniform frequency characteristics. Thus, elastic force of the upper plate 110 should be in an appropriate range according to a transmitting structure of a vibration source, that is, a transmitting structure of the electronic device 10, to obtain a high sound pressure and a high quality sound. The mass of the upper plate 110 may be small, so that the upper plate 110 can efficiently vibrate. However, as the mass of the upper plate 110 decreases, a resonant frequency thereof increases to degrade a sound quality. Thus, a specific modulus of elasticity

(= a modulus of elasticity/a density) of the upper plate 110 is adjusted to obtain an optimal combination of an efficiency of a speaker and the resonant frequency of the upper plate 110. Since the sound amplification box contacts the electronic device 10 having a contact type speaker, to amplify a sound, at least a predetermined area (ratio) of the upper plate 110 is exposed in at least one side direction of the electronic device 10. That is, the size of the upper plate 110 is greater than that of the electronic device 10. To this end, at least the upper plate 110 may employ a sandwich plate. For example, a polymer-based material having a density ranging from approximately 10.0 kg/m² to 20.0 kg/m² and a modulus of elasticity ranging from approximately 2500×10⁶ N/m² to 3500×10⁶ N/m² may be used to form the upper plate 110, and pulp having a density ranging from approximately 100 kg/m² to 300 kg/m² and a modulus of elasticity ranging from approximately 100×10⁶ N/m² to 200×10⁶ N/m² may be adhered to both surfaces of the upper plate 110 to improve impendence matching characteristics with air. For example, the upper plate 110 may be manufactured from a plate in which White Snow is adhered to both surfaces of polystyrene. Furthermore, not only the upper plate 110 but also the lower plate 120 and the side wall plates 130 may employ a sandwich plate.

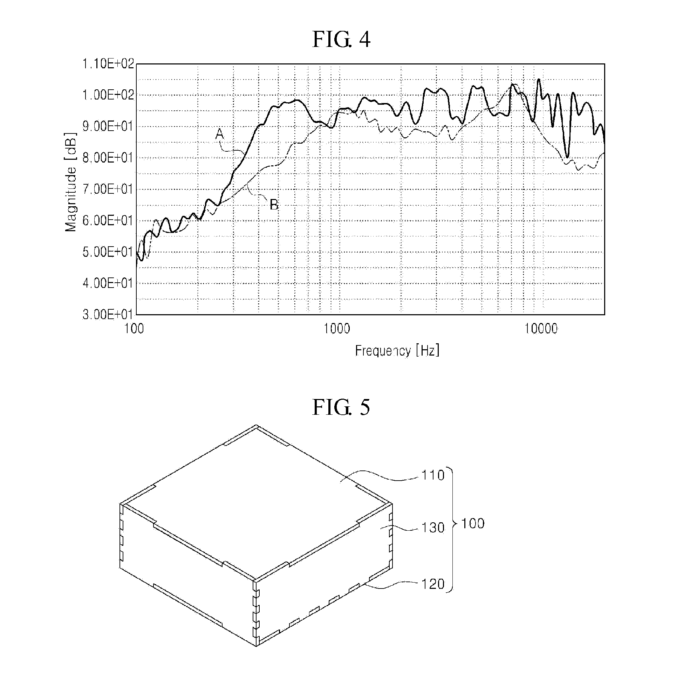

FIG. 4 is a graph illustrating a comparison of frequency characteristics A of the sound amplification box with frequency characteristics B of a dynamic speaker. Table 1 shows the comparison of FIG. 4.

**Table 1**

| | Fo (kHz) RESONANT FREQUENCY | SOUND PRESSURE (dB) | | | |
|---|---|---|---|---|---|
| | | 0.5kHz (LOW SOUND PRESSURE PART) | 0.8-1.5kHz (AVERAGE SOUND PRESSURE) | 3kHz | 0.3-20kHz (AVERAGE SOUND PRESSURE) |
| SANDWICH TYPE (A) | 0.63 | 96.0 | 93.3 | 99.5 | 95.3 |
| DYNAMIC (B) | 1.00 | 97.0 | 93.2 | 88.1 | 87.1 |

As described above, a resonant frequency of a sound amplification box employing a sandwich plate is lower than that of a dynamic speaker, and frequency characteristics of the sound amplification box is superior to those of the dynamic speaker in a whole frequency range.

The sound amplification box in accordance with the current embodiment has an approximately hexahedral shape with a predetermined resonance space therein, and the hexahedral shape may be variously changed. Such sound amplification boxes will now be described with reference to FIGS. 5 to 14 in accordance with various embodiments.

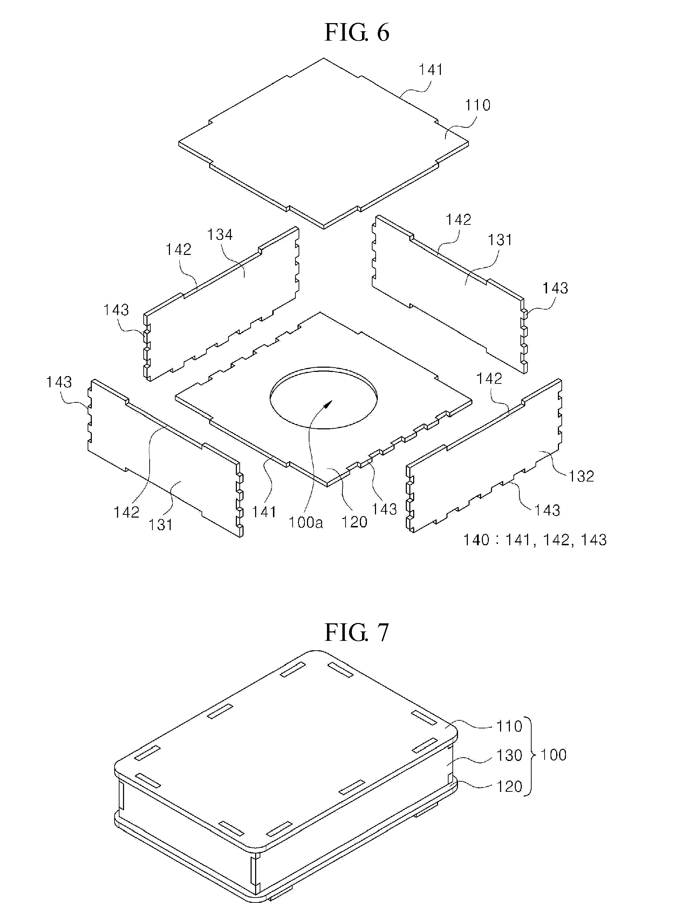

FIGS. 5 and 6 are schematic views illustrating a separation type sound amplification box in accordance with an exemplary embodiment. That is, FIGS. 5 and 6 are a perspective view and an exploded perspective view illustrating a sound amplification box in accordance with the current embodiment, respectively.

Referring to FIGS. 5 and 6, a sound amplification box in accordance with the current embodiment includes an upper plate 110, a lower plate 120, and a plurality of side wall plates 131, 132, 133, and 134 (130). The upper plate 110 and the lower plate 120 have an approximately tetragonal plate shape, and a resonance hole 100a is formed in a predetermined region of the lower plate 120, e.g., in a central part thereof. Joining parts 140 may be disposed on sides of the upper plate 110, the lower plate 120, and the side wall plates 130 to join the sides to one another. The joining parts 140 may include protrusion parts 141 protruding from side surfaces thereof, recess parts 142 recessed in the side surfaces, and uneven parts 143 in which protrusion parts and recess parts are repeatedly formed. That is, the protrusion parts 141, the recess parts 142, and the uneven parts 143 are selectively formed in one or more regions of the sides of the upper plate 110, the lower plate 120, and the side wall plates 130, and the protrusion parts 141, the recess parts 142, and the uneven parts 143 are joined to one another, thereby coupling the upper plate 110, the lower plate 120, and the side wall plates 130 to one another. For example, the protrusion parts 141 may be formed on four sides of the upper plate 110, respectively, and the recess parts 142 may be formed on two sides of the lower plate 120, and the uneven parts 143 may be formed on the other two sides of the lower plate 120. The recess parts 142 and the uneven parts 143 may be formed in the side wall plates 130. The recess parts 142 may be formed on upper and lower sides of the side wall plates 131 and 133, respectively, to correspond to the protrusion parts 141 of the upper plate 110 and the lower plate 120. The recess parts 142 may be formed on upper sides of the side wall plates 132 and 134 to correspond to the protrusion parts 141 of the upper plate 110. The uneven parts 143 may be formed on lower sides of the side wall plates 132 and 134 to correspond to the uneven parts 143 of the lower plate 110. The uneven parts 143 may be formed on lateral sides of the side wall plates 130 where the side wall plates 130 contact one another, and be joined to one another.

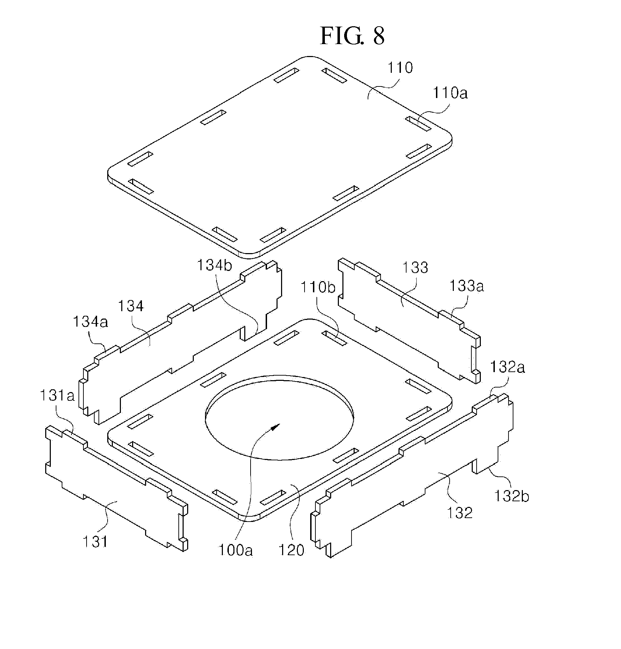

The separation type sound amplification box may be modified as illustrated in FIGS. 7 and 8.

Referring to FIGS. 7 and 8, a sound amplification box in accordance with an exemplary embodiment includes an upper plate 110, a lower plate 120, and a plurality of side wall plates 131, 132, 133, and 134 (130). The upper plate 110 and the lower plate 120 have an approximately tetragonal plate shape, and a resonance hole 100a is formed in a predetermined region of the lower plate 120, e.g., in a central part thereof. Insertion holes 110a and 120a may be formed in edges of the upper plate 110 and the lower plate 120, respectively, that is, in regions of the upper plate 110 and the lower plate 120 where the upper plate 110 and the lower plate 120 contact the side wall plates 130. That is, the insertion holes 110a and 120a may be formed into the same shape and at the same interval in the same locations of the upper plate 110 and the lower plate 120, and have a predetermined length along sides of the upper plate 110 and the lower plate 120. A plurality of protrusion parts 131a, 132a, 133a, and 134a are formed in the side wall plates 131, 132, 133, and 134 to correspond to the insertion holes 110a and 120a. Thus, the protrusion parts 131a, 132a, 133a, and 134a of the side wall plates 131, 132, 133, and 134 are inserted in the insertion holes 110a and 120a of the upper plate 110 and the lower plate 120. Accordingly, each of two sides of the side wall plates 131, 132, 133, and 134 air-tightly contacts a surface of each of the upper plate 110 and the lower plate 120, thereby forming a body 100 having a rectangular parallelepiped shape with a predetermined space therein. The protrusion parts 131a, 132a, 133a, and 134a have a length that is the same as a thickness of the upper plate 110 and the lower plate 120. Thus, the protrusion parts 131a, 132a, 133a, and 134a are prevented from protruding out of outer surfaces of the upper plate 110 and the lower plate 120 after the protrusion parts 131a, 132a, 133a, and 134a are inserted in the insertion holes 110a and 120a. Alternatively, the length of the protrusion parts 131a, 132a, 133a, and 134a may be smaller or greater than the thickness of the upper plate 110 and the lower plate 120. Side surfaces of the side wall plates 131, 132, 133, and 134 may air-tightly contact one another. To this end, recess parts are formed in the side surfaces of the side wall plates 131 and 133, and protrusion parts are formed on the side surfaces of the side wall plates 132 and 134. the recess parts are coupled to the protrusion parts to air-tightly couple the side surfaces of the side wall plates 130 to one another.

At least two of the side wall plates 131, 132, 133, and 134 may include second protrusion parts that are longer than the protrusion parts 131a, 132a, 133a, and 134a. For example, second protrusion parts 132b and 134b of the side wall plates 132 and 134, which are inserted in the insertion holes 120a corresponding to the long sides of the lower plate 120, may be longer than the protrusion parts 132a and 134a inserted in the upper plate 110. Thus, after the protrusion parts 131a, 132a, 133a, and 134a of the side wall plates 131, 132, 133, and 134 are inserted in the upper plate 110 and the lower plate 120, the second protrusion parts 132b and 134b may function as support parts for preventing the lower plate 120 from contacting a ground. That is, a separate support part is unnecessary, and the second protrusion parts 132b and 134b of the side wall plates 131, 132, 133, and 134 may be used as support parts. A support part may be disposed in a predetermined region of a surface of the lower plate 120 facing the ground.

The sound amplification boxes in accordance with the embodiments of FIGS. 5 to 8 have improved portability since the upper plate 110, the lower plate 120, and the side wall plates 130 as completely separate parts are coupled to one other. That is, since portable separate plates decrease the volume of the sound amplification boxes and be assembled if necessary, the portability of the sound amplification boxes is superior to portability of a sound amplification box having a predetermined volume.

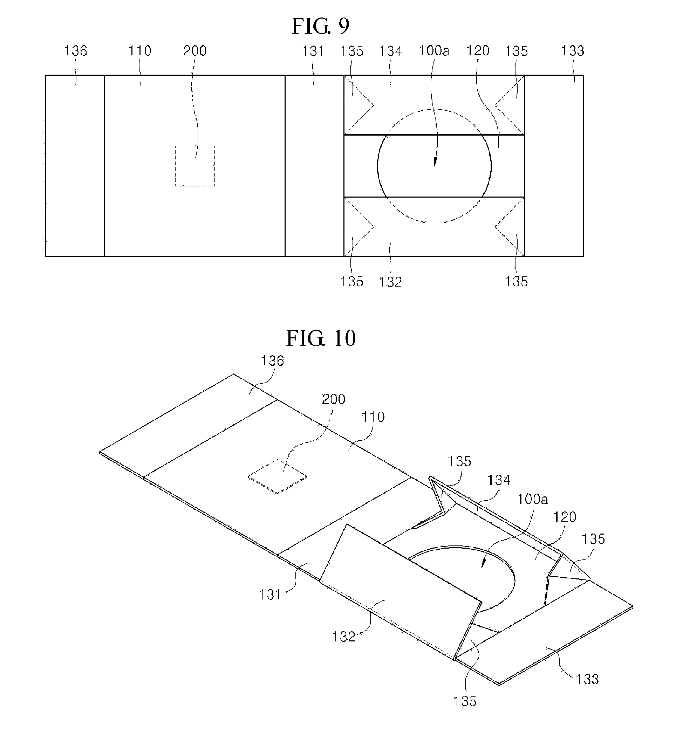

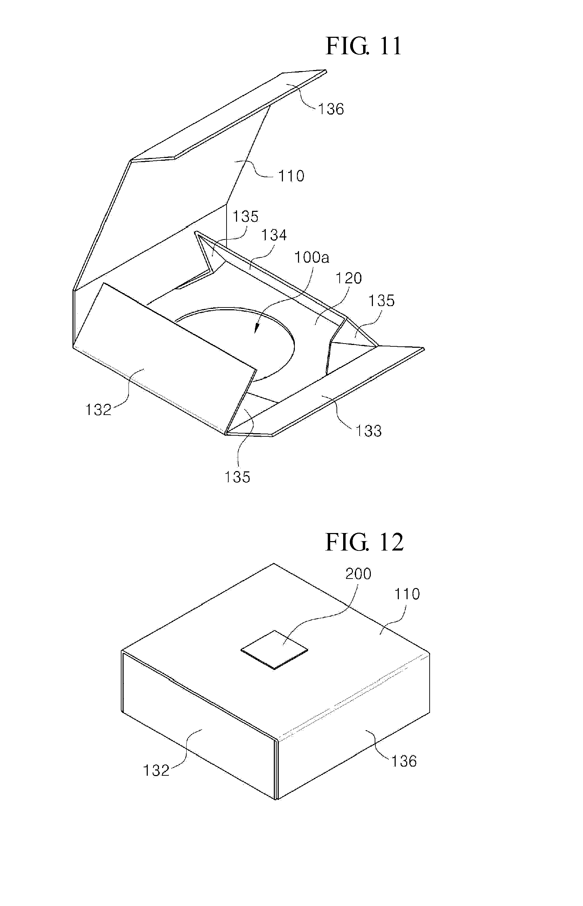

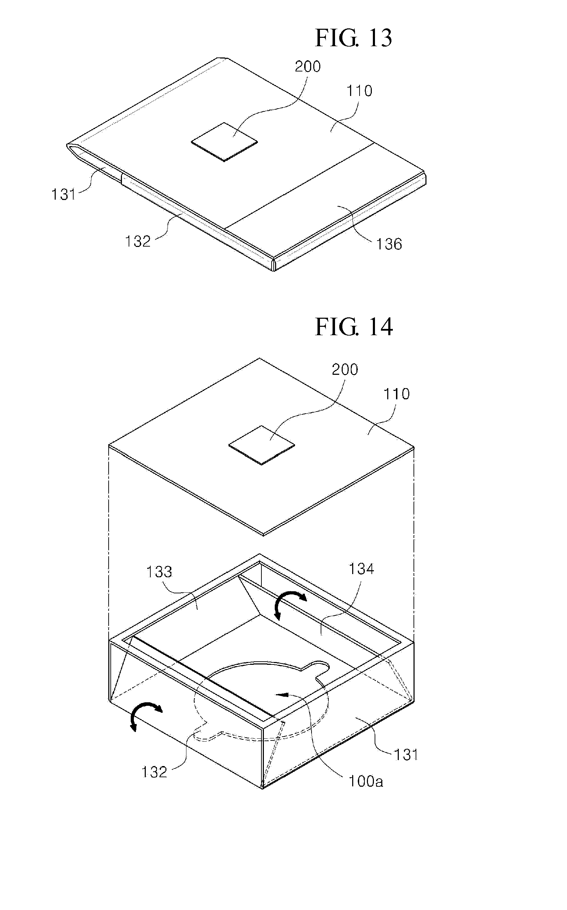

FIGS. 9 to 13 are schematic views illustrating a folding type sound amplification box in accordance with an exemplary embodiment. That is, FIG. 9 is a planar figure illustrating a sound amplification box, FIGS. 10 and 11 are planar figures with a part folded, FIG. 12 is a schematic view illustrating the sound amplification box that is entirely folded, and FIG. 13 is a schematic view illustrating the sound amplification box after an assembling process.

Referring to FIGS. 9 to 13, a sound amplification box in accordance with the current embodiment includes an upper plate 110, a lower plate 120, and a plurality of side wall plates 131, 132, 133, and 134 that may be disposed at edges of the upper plate 110 and the lower plate 120. A side of each of the side wall plates 131, 132, 133, and 134 may be connected to each of four sides of the lower plate 120. To this end, the side wall plates 131, 132, 133, and 134 may extend from the four sides of the lower plate 120, respectively, and be folded to the upper plate 110 therefrom. That is, the side wall plates 131, 132, 133, and 134 may be integrally formed with the lower plate 120 such that the side wall plates 131, 132, 133, and 134 extend from the four sides of the lower plate 120 and are foldable. Another side of the side wall plate 131 contacts a side of the upper plate 110. That is, the side wall plate 131 is disposed between a side of the lower plate 120 and a side of the upper plate 110 and is foldable. Thus, the upper plate 110, the side wall plate 131, the lower plate 120, and the side wall plate 133 are connected to one another in a direction, and the side wall plates 131 and 133 are foldable to the upper plate 110, and the upper plate 110 is foldable from the second side of the side wall plate 131 to the side wall plate 133. Connecting parts 135 may be disposed in predetermined inner regions of the side wall plates 132 and 134. For example, the connecting parts 135 may be disposed at edges of the side wall plates 132 and 134 and in predetermined regions of the lower plate 120 close to border regions between the lower plate 120 and the side wall plates 131 and 133. A material for the connecting parts 135 may be the same as a material for the upper plate 110, the lower plate 120, and the side wall plates 131, 132, 133, and 134, and be thinner than the material. The connecting parts 135 are foldable such that: when the side wall plates 132 and 134 completely stand upright, the connecting parts 135 contact inner surfaces of the side wall plates 131 and 133; and when the side wall plates 132 and 134 are folded, the connecting parts 135 are located between the lower plate 120 and the side wall plates 132 and 134. The connecting parts 135 maintain air-tightness between the side wall plates 130 when the side wall plates 130 stand upright. An outer plate 136 having the same shape as that of the side wall plate 133 may be disposed on another side of the upper plate 110 opposite to the side of the upper plate 110 connected to the side wall plate 131. The outer plate 136 covers the side wall plate 133 from the outside of the body 100 when the body 100 is assembled. A magnet may be disposed in a predetermined region of a contact surface between the side wall plate 133 and the outer plate 136 to fix the side wall plate 133 and the outer plate 136 with magnetic force.

Referring to FIG. 9, the outer plate 136, the upper plate 110, the side wall plate 131, the lower plate 120, and the side wall plate 133 may be unfolded such that a surface of each of the outer plate 136, the upper plate 110, the side wall plate 131, the lower plate 120, and the side wall plate 133 contacts a ground, and the side wall plates 132 and 134 may be folded to contact a surface of the lower plate 120. Referring to FIG. 12, the side wall plate 133 may be folded to contact an upper surface of the lower plate 120, and the upper plate 110 may be folded such that the outer plate 136 and the side wall plate 133 are fixed by the magnet. The side wall plates 132 and 134 may be folded to contact the upper surface of the lower plate 120. Thus, in this case, the sound amplification box has a size smaller than the size of a sound amplification box with a plurality of plates unfolded as illustrated in FIG. 9, and is thus more convenient to carry. Referring to FIG. 13, the sound amplification box may be assembled by standing the side wall plates 131, 132, 133, and 134, bringing the upper plate 110 face to face with the upper side of the lower plate 120, bringing the outer plate 136 into contact with an outer part of the side wall plate 133, and fixing the outer plate 136 and the side wall plate 133 by means of the magnet.

The upper plate 110 may be a separate part and be coupled to the sound amplification box after the sound amplification box is assembled. That is, a surface of the sound amplification box facing the lower plate 120, that is, an upper surface of the sound amplification box may include: a remained region at the edge thereof; and an opening in the rest thereof, and the remained region has a width that is the same as or greater than a width of the side wall plates 131, 132, 133, and 134. In this case, the upper plate 110 may be brought into contact with and coupled to the remained region to cover the opening.

In accordance with the current embodiment, the upper plate 110, the lower plate 120, and the side wall plates 131, 132, 133, and 134 may be integrally formed, and the sound amplification box may be assembled with the side wall plates 131, 132, 133, and 134 standing upright if necessary, thereby decreasing the volume of the sound amplification box and improving portability thereof.

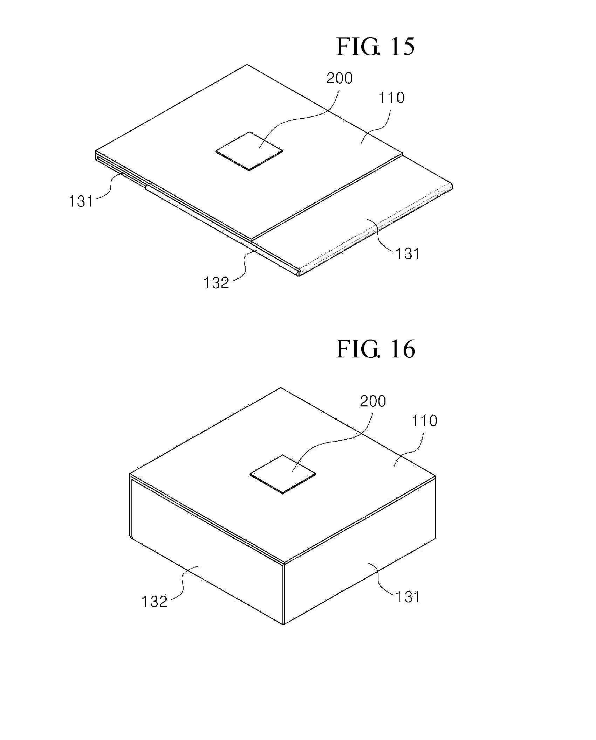

FIGS. 14 to 16 are schematic views illustrating a folding and tunnel type sound amplification box in accordance with an exemplary embodiment. That is, FIG. 14 is an exploded perspective view illustrating a sound amplification box with a part unfolded, FIG. 15 is a schematic view illustrating the sound amplification box after a folding process, and FIG. 16 is a schematic view illustrating the sound amplification box after an assembling process.

Referring to FIGS. 14 to 16, a sound amplification box in accordance with the current embodiment includes an upper plate 110, a lower plate 120, and a plurality of side wall plates 131, 132, 133, and 134 disposed between the upper plate 110 and the lower plate 120. A side of each of the side wall plates 131, 132, 133, and 134 contacts each of four sides of the lower plate 120, and another side of each of the side wall plates 131 and 133 that are opposite to each other contacts each of two sides of the upper plate 110. To this end, the side wall plates 131 and 133 are integrally formed with the lower plate 120 such that the first sides of the side wall plates 131 and 133 are foldable with two sides of the lower plate 120, and the side wall plates 131 and 133 are integrally formed with the upper plate 110 such that the second sides of the side wall plates 131 and 133 are foldable with the two sides of the upper plate 110. The side wall plates 132 and 134 are integrally formed with the lower plate 120 such that two sides of the lower plate 120 facing each other are foldable with the side wall plates 132 and 134, and are separated from the upper plate 110. Thus, the side wall plates 132 and 134 may be folded to contact an inner surface of the lower plate 120, and be vertically unfolded to assemble the sound amplification box. Connecting parts (not shown) connected to the side wall plates 131 and 133 may be disposed at the inside of the side wall plates 132 and 134. The connecting parts may prevent a gap from being formed between the side wall plates 131, 132, 133, and 134 when the side wall plates 131, 132, 133, and 134 stand upright.

Referring to FIG. 14, when the side wall plates 131 and 133 opposite to each other stand upright, the upper plate 110 and the lower plate 120 may face each other, and the side wall plates 132 and 134 adjacent to the side wall plates 131 and 133 and facing each other may be folded to contact the inner surface of the lower plate 120. Referring to FIG. 15, the side wall plate 133 may be folded such that an outer surface of the side wall plate 133 contacts a ground, and the side wall plate 131 may be folded such that an inner surface of the side wall plate 131 contacts the lower plate 120. In this case, the side wall plates 132 and 134 may be folded to contact an upper surface of the lower plate 120. Referring to FIG. 16, the sound amplification box may be assembled by standing the side wall plates 131, 132, 133, and 134, and bringing the upper plate 110 face to face with the upper side of the lower plate 120.

In accordance with the current embodiment, the upper plate 110, the lower plate 120, and the side wall plates 131, 132, 133, and 134 may be integrally formed, thereby decreasing the volume of the sound amplification box and improving portability thereof.

The electronic device 10, which contacts the sound amplification box to provide a sound, may include a sound providing device such as a smart phone, and a dynamic speaker or a piezoelectric speaker may be installed in the electronic device 10. Alternatively, the electronic device 10 may be joined to a portable piezoelectric speaker, so that the portable piezoelectric speaker can output a sound provided by the electronic device 10. Such a portable piezoelectric speaker joined to the electronic device 10 and contacting the sound amplification box will now be described.

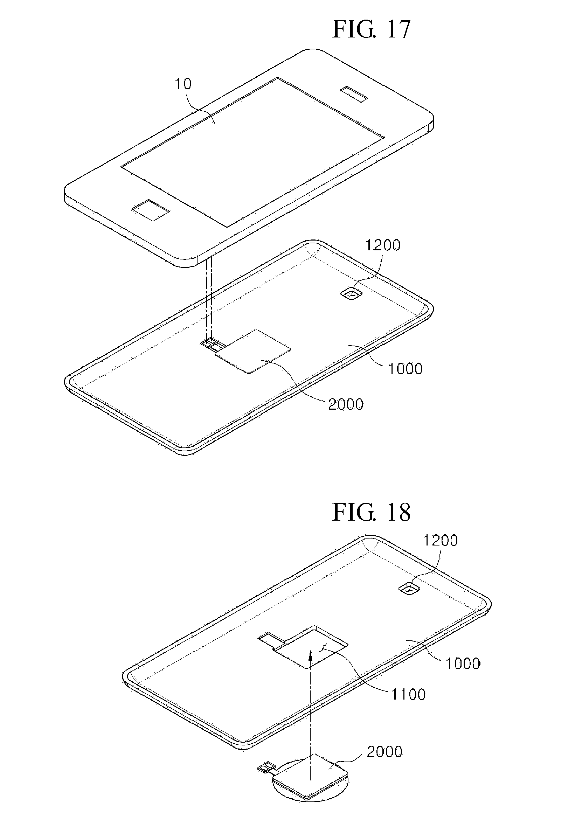

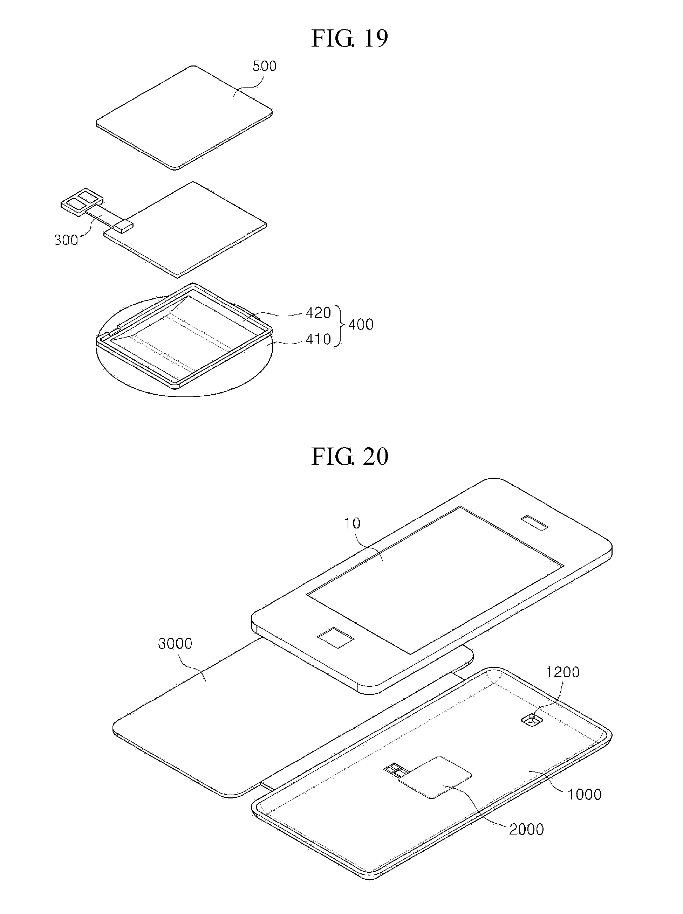

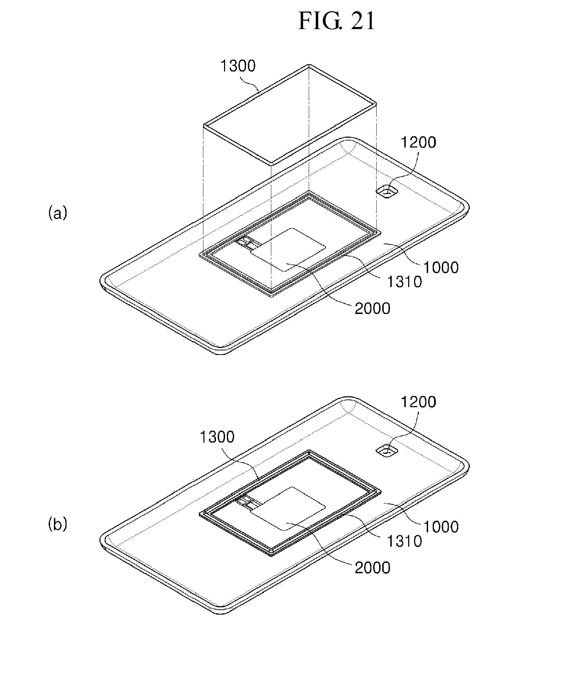

FIGS. 17 to 21 are schematic views illustrating a portable piezoelectric speaker integrally formed with a rear cover of an electronic device, in accordance with an exemplary embodiment. That is, FIG. 17 is a perspective view illustrating the front of the portable piezoelectric speaker, and FIG. 18 is a schematic view illustrating a method of joining a body of the portable piezoelectric speaker to a piezoelectric speaker module. FIG. 19 is an exploded perspective view illustrating the piezoelectric speaker module. FIGS. 20, 21A, and 21B are schematic views illustrating portable piezoelectric speakers in accordance with modifications of the current embodiment.

Referring to FIGS. 17 to 19, a portable piezoelectric speaker in accordance with the current embodiment may include a body 1000 joined to a rear surface of an electronic device 10, and a piezoelectric speaker module 2000 disposed in a region of the body 1000 and connected to the electronic device 10. The body 1000 provided with the piezoelectric speaker module 2000 may be joined to the rear surface of the electronic device 10 after a rear cover for covering the rear surface of the electronic device 10 is removed from the rear surface of the electronic device 10. Alternatively, the body 1000, as the rear cover, may cover the rear surface of the electronic device 10 in a production process. Referring to FIG. 20, the portable piezoelectric speaker may further include a flip cover 3000 disposed on a side surface of the body 1000 and having a size to cover a front surface of the electronic device 10.

The electronic device 10 may include a portable terminal such as a tablet PC or a smart phone, and a smart phone is exemplified in the current embodiment. The electronic device 10 may have a tetragonal shape with a predetermined thickness and include a display part, a receiving part, and a key button on the front surface, and a circuit device therein. The rear cover may be removably coupled to the electronic device 10 to cover the rear surface of the electronic device 10. When the rear cover is removed from the electronic device 10, a battery may be joined to a predetermined region of the rear surface of the electronic device 10, and an NFC terminal may be exposed. In addition, a camera may be provided on the rear surface of the electronic device 10. An NFC antenna may be disposed at the inside of the rear cover and be connected to the NFC terminal.

The body 1000 is removably coupled to the electronic device 10. That is, the body 1000 may have the same shape as that of the rear cover for covering the rear surface of the electronic device 10, and be joined to the rear surface of the electronic device 10 after the rear cover is removed therefrom. Alternatively, the body 1000, as the rear cover, may be joined to the rear surface of the electronic device 10 while the electronic device 10 is produced. For example, at least one joining recess (not shown) may be formed at an edge of the rear surface of the electronic device 10, and at least one joining protrusion (not shown) may be formed in a region of the body 1000 corresponding to the joining recess, to removably couple the body 1000 to the electronic device 10. Thus, the joining protrusion of the body 1000 may be inserted in the joining recess of the electronic device 10 to join the body 1000 to the electronic device 10. The body 1000 may be flexible to be deformed, e.g., bent in a predetermined range. To this end, the body 1000 may be formed of polyimide (PI), polycarbonate (PC), or a metal. The body 1000 may be formed of the same material as a material for the rear cover of the electronic device 10. Polyimide is a thermal conductive plastic and a polymer having excellent mechanical strength and excellent thermal and chemical stability. Polycarbonate, which is a thermoplastic plastic, has excellent heat resistance, shock resistance, and optical characteristics and is easy to process. A first opening 1100 may be formed in the body 1000, and the piezoelectric speaker module 2000 may be inserted in the first opening 1100. A second opening 1200 may be formed in the body 1000 to expose the camera (not shown) exposed through the rear surface of the electronic device 10. That is, the piezoelectric speaker module 2000 is inserted in the first opening 1100, and the camera is exposed to the outside through the second opening 1200.

The piezoelectric speaker module 2000 may be inserted in the first opening 1100 of the body 1000 and be fixed to a predetermined region of the body 1000. For example, the piezoelectric speaker module 2000 may be manufactured by spacing a piezoelectric device a predetermined distance from a vibration transmitting body. The piezoelectric device has a structure in which a plurality of piezoelectric layers are staked and polarized in a thickness direction thereof with an unpolarized vibration induction layer therebetween. For example, the piezoelectric speaker module 2000 may have an approximately dome shape in which the predetermined distance between the piezoelectric device and the vibration transmitting body increases from the edge thereof to the central part thereof. In particular, referring to FIG. 17, the piezoelectric speaker module 2000 may include a piezoelectric device 100, a connecting terminal 300 disposed in a predetermined region on the piezoelectric device 100, a bottom vibration transmitting case 400 as a vibration transmitting body disposed under the piezoelectric device 100, and a top cover 500 disposed above the piezoelectric device 100. Further, the piezoelectric speaker module 2000 may include a first adhesive tape (not shown) for attaching the piezoelectric device 100 to the bottom vibration transmitting case 400, and a second adhesive tape (not shown) for attaching the piezoelectric device 100 to the top cover 500. Although the bottom vibration transmitting case 400 is spaced a predetermined distance from a lower surface of the piezoelectric device 100 to function as a vibration transmitting plate, the bottom vibration transmitting case 400 is different in structure from a vibration transmitting plate and is different in location from the top cover 500 disposed above the bottom vibration transmitting case 400. Thus, a part denoted by reference numeral 400 is referred to as the bottom vibration transmitting case.

The connecting terminal 300 is disposed in the predetermined region on the piezoelectric device 100 and is exposed to the outside of the piezoelectric speaker module 2000. The connecting terminal 300 provides predetermined electric power and a sound source to the piezoelectric device 100. That is, the connecting terminal 300 is connected to an output terminal of the electronic device 10 to supply the predetermined electric power and the sound source to the piezoelectric device 100. For example, the NFC terminal is exposed on the rear surface of the electronic device 10, and the connecting terminal 300 is connected to the NFC terminal. Thus, the piezoelectric speaker module 2000 is driven by the electric power and the sound source supplied from the electronic device 10 through the NFC terminal and the connecting terminal 300. For example, a flexible printed circuit board (FPCB) may be used as the connecting terminal 300. The connecting terminal 300 may have a part exposed to the outside of the piezoelectric speaker module 2000 and tightly fixed to a predetermined region of the body 1000, and be fixedly adhered to a receiving recess formed in a region of the body 1000.

The bottom vibration transmitting case 400 receives the piezoelectric device 100 and is inserted in and joined to the first opening 1100 of the body 1000. The bottom vibration transmitting case 400 includes a base 410 and a joining part 420 protruding upward from a surface of the base 410. The base 410 may be larger than the first opening 1100 of the body 1000 and be exposed through a rear surface of the body 1000. Thus, the base 410 may protrude from the rear surface of the body 1000. The base 410 may have one of various shapes such as a tetragonal shape, a circular shape, and a polygonal shape. For example, the base 410 may have an oval shape as illustrated in FIG. 17. The base 410 may be formed of the same material as a material for the body 1000. The base 410 may have an flat inner surface or a curved inner surface. That is, an inner surface of the base 410 facing the piezoelectric device 100 may be spaced a predetermined distance from the piezoelectric device 100 and include a predetermined curved surface such that the predetermined distance increases from the edge of the inner surface to the central part thereof The joining part 420 protrudes into a predetermined shape from the base 410 and receives the piezoelectric device 100. To this end, the joining part 420 may have the same shape as that of the piezoelectric device 100, and protrude upward from the base 410. Thus, a side surface of the piezoelectric device 100 may contact an inner surface of the joining part 420 and be fixed thereto. The bottom vibration transmitting case 400 may include a raised part at the inside of the joining part 420, and the raised part may be higher than the base 410. For example, the raised part may be disposed at the inside of two side parts facing each other and have a height lower than that of the side parts, and an edge of the piezoelectric device 100 may be attached to the raised part through the first adhesive tape. Since the piezoelectric device 100 is disposed on the raised part, a predetermined space is formed between a surface of the piezoelectric device 100 and the bottom vibration transmitting case 400 facing the surface of the piezoelectric device 100, that is, between the surface of the piezoelectric device 100 and an inner plane of the base 410.

The top cover 500 protects the piezoelectric device 100 from external physical force and covers an upper surface of the piezoelectric device 100. That is, the top cover 500 may be attached to an edge of the upper surface of the piezoelectric device 100 by the second adhesive tape. The top cover 500 may be formed from a thin plate having high strength and hardness and resistant to bending, for example, from stainless steel. If the top cover 500 contacts the upper surface of the piezoelectric device 100, the piezoelectric device 100 may collide with the top cover 500 when the piezoelectric device 100 vibrates. Accordingly, the vibration of the piezoelectric device 100 may be transmitted to the electronic device 10 through the top cover 500, and vibration force of the piezoelectric device 100 may be reduced. To prevent the reduction of the vibration force, a cushion material (not shown) may be disposed between the piezoelectric device 100 and the top cover 500. That is, the cushion material is disposed at two edges of the piezoelectric device 100 to maintain a predetermined distance between the top cover 500 and the piezoelectric device 100.

Referring to FIGS. 21A and 21B, a cushion material 1300 may be disposed on an inner surface of the body 1000 to surround the piezoelectric speaker module 2000. The cushion material 1300 may provide a space for the piezoelectric speaker module 2000 and prevent an abnormal sound of the electronic device 10 caused by a vibration of the piezoelectric speaker module 2000. For example, the cushion material 1300 may be formed of a silicone material and have one of various shapes such as a circular shape and a tetragonal shape to surround the piezoelectric speaker module 2000. The cushion material 1300 may be attached to the body 1000 or be inserted in a receiving space 1310 disposed on the body 1000. That is, first and second partition walls, which surround the piezoelectric speaker module 2000, may be spaced a predetermined distance from each other, and the cushion material 1300 may be inserted between the first and second partition walls. In this case, the cushion material 1300 may contact the rear surface of the electronic device 10. If the cushion material 1300 has an excessive height, it may be difficult to join the body 1000 to the electronic device 10. Thus, the cushion material 1300 may have a height to join the body 1000 to the electronic device 10.

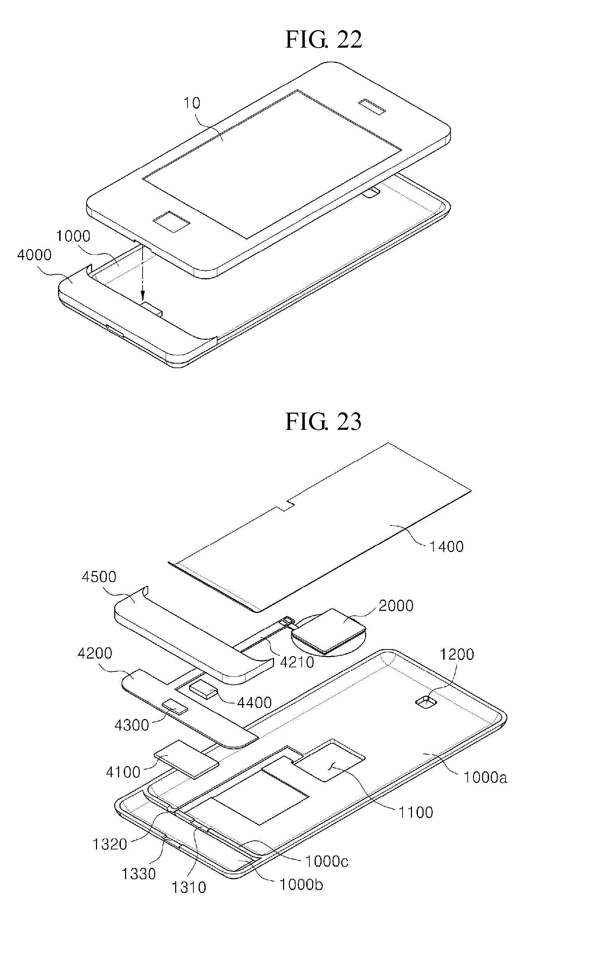

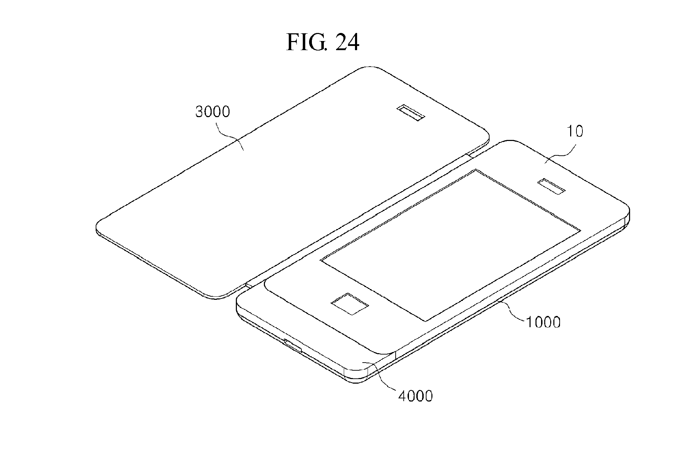

FIGS. 22 to 24 are schematic views illustrating portable piezoelectric speakers according embodiments. That is, FIGS. 22 and 23 are schematic view and an exploded perspective view illustrating a portable piezoelectric speaker in accordance with an exemplary embodiment, and FIG. 24 is a schematic view illustrating a portable piezoelectric speaker in accordance with a modification of the embodiment of FIGS. 22 and 23.

Referring to FIGS. 22 and 23, a portable piezoelectric speaker in accordance with an exemplary embodiment may include a body 1000 joined to a rear surface of an electronic device 10, a piezoelectric speaker module 2000 disposed in a region of the body 1000 and connected to the electronic device 10, and a power supply part 4000 disposed in a region of the body 1000 to supply electric power to the piezoelectric speaker module 2000. Referring to FIG. 24, the portable piezoelectric speaker may further include a flip cover 3000 disposed on a side surface of the body 1000 to cover a front surface of the electronic device 10.

The body 1000 may include a first region 1000a corresponding to the rear surface of the electronic device 10, and a second region 1000b disposed at the lower side of the first region 1000a and provided with the power supply part 4000. That is, the first region 1000a of the body 1000 may have the same size as that of the electronic device 10 and be joined to the rear surface of the electronic device 10, and the second region 1000b of the body 1000 may be disposed on the lower side of the first region 1000a corresponding to the lower side of the electronic device 10. When the electronic device 10 is joined to the first region 1000a of the body 1000, a rear cover may be removed from the electronic device 10. That is, as described in the previous embodiment, after the rear cover is removed from the electronic device 10, the body 1000 is joined to the rear surface of the electronic device 10. A middle wall 1000c, which is higher than a bottom surface of the body 1000, may be disposed between the first and second regions 1000a and 1000b. For example, the middle wall 1000c may have the same height as that of a lower part of the electronic device 10 provided with a connector. That is, a plurality of joining protrusions (not shown) may be disposed at an edge of the first region 1000a of the body 1000 and be inserted in and joined to joining recesses (not shown) of the electronic device 10, and the middle wall 1000c may have the same height as that of a lower surface of the electronic device 10 and contact the lower surface. For example, a central part of the middle wall 1000c, corresponding to the connector of the electronic device 10 and having the same size as that of the connector, may be removed to form a first recess 1310. In addition, a predetermined region of the middle wall 1000c, spaced apart in a direction from the central part thereof and having a predetermined size, may be removed to form a second recess 1320. A first opening 1100 having a predetermined size is formed in the first region 1000a of the body 1000, and the piezoelectric speaker module 2000 is inserted in the first opening 1100. A space in which, e.g., an NFC antenna, a DMB antenna, or a Bluetooth antenna is installed may be disposed in a predetermined region of the first region 1000a of the body 1000, e.g., at the lower side of the first opening 1100 in which the piezoelectric speaker module 2000 is inserted. The space in which an NFC antenna, a DMB antenna, or a Bluetooth antenna is installed may correspond to, e.g., a space in which a battery of the electronic device 10 is installed. An upper cover 1400 may be attached to the first region 1000a of the body 1000 to cover the first region 1000a. That is, the piezoelectric speaker module 2000 or an antenna may be provided on the first region 1000a of the body 1000 and be exposed to the outside, and the upper cover 1400 may cover the piezoelectric speaker module 2000 or the antenna to prevent the piezoelectric speaker module 2000 or the antenna from being exposed to the outside. The upper cover 1400 may have at least the same size as that of the first region 1000a, and a part of the upper cover 1400 where a connecting terminal 300 of the piezoelectric speaker module 2000 is connected to an NFC terminal of the electronic device 10 may be removed.

The power supply part 4000 may be disposed in a region of the body 1000 corresponding to the lower side of the electronic device 10. That is, the power supply part 4000 may be disposed in the second region 1000b extending from the first region 1000a of the body 1000. The power supply part 4000 may supply electric power to the piezoelectric speaker module 2000 and generate and supply electric power needed for driving the piezoelectric speaker module 2000. The power supply part 4000 may be connected to an external power supply terminal or a data supply terminal. The power supply part 4000 may be connected to the electronic device 10. That is, the external power supply terminal or the data supply terminal may be connected to a side of the power supply part 4000, and the electronic device 10 may be connected to another side of the power supply part 4000. The power supply part 4000 may include a battery 4100, a circuit board 4200, first and second connectors 4300 and 4400, and a lower cover 4500. The battery 4100 may be charged with electric power supplied through a power supply terminal connected to the first connector 4300. The first and second connectors 4300 and 4400 are disposed above the circuit board 4200, and a lower part of the circuit board 4200 is connected to the battery 4100. The first connector 4300 is connected to the external power supply terminal or the data supply terminal, and the second connector 4400 is connected to the electronic device 10. The power supply part 4000 will now be described in more detail. A portion of a region of the second region 1000b corresponding to the first recess 1310 of the middle wall 1000c is removed to form a third recess 1330. The first connector 4300 corresponds to the third recess 1330, and the second connector 4400 corresponds to the first recess 1310. The first connector 4300 is embedded in the power supply part 4000 and is thus prevented from being exposed to the outside, and the second connector 4400 is exposed to the first region 1000a. That is, when the lower cover 4500 covers the upper sides of the battery 4100, the circuit board 4200, and the first and second connectors 4300 and 4400 disposed in the second region 1000b, a recess in which the first connector 4300 is embedded is exposed under the power supply part 4000, and the second connector 4400 protrudes from the upper side of the power supply part 4000. The first connector 4300 may have a size such that the power supply terminal or the data supply terminal can be inserted in the first connector 4300, and the second connector 4400 may have a size such that the second connector 4400 can be inserted in the connector of the electronic device 10. That is, the power supply terminal or the data supply terminal is inserted in the first connector 4300, and the second connector 4400 is inserted in the connector of the electronic device 10. The first and second connectors 4300 and 4400 are connected to the circuit board 4200 disposed under the first and second connectors 4300 and 4400. The battery 4100 may be disposed under the circuit board 4200, and a connecting line 4210 may extend from a region of the circuit board 4200. Thus, the circuit board 4200 may charge the battery 4100 with electric power supplied through the first connector 4300, and supply electric power from the battery 4100 to the piezoelectric speaker module 2000 through the connecting line 4210. A power amplification circuit may be disposed on the circuit board 4200 to amplify the electric power to be supplied to the piezoelectric speaker module 2000. That is, the piezoelectric speaker module 2000 may be driven by electric power that is higher than electric power for driving the electronic device 10, and the electric power driving the piezoelectric speaker module 2000 may be generated and supplied by the power supply part 4000. The connecting line 4210 disposed at a side of the circuit board 4200 is connected through the second recess 1320 of the middle wall 1000c to the piezoelectric speaker module 2000 disposed in the first region 1000a. Since the second connector 4400 is connected to the electronic device 10, electric power or data may be supplied to the electronic device 10 through the first and second connectors 4300 and 4400. Thus, the portable piezoelectric speaker may be used to amplify a sound volume and charge the electronic device 10. When the electronic device 10 is charged, the battery 4100 of the power supply part 4000 may also be charged, and the piezoelectric speaker module 2000 may be driven by the battery 4100.

Although the sound amplification box and the sound amplification device including the sound amplification box have been described with reference to the specific embodiments, they are not limited thereto. Therefore, it will be readily understood by those skilled in the art that various modifications and changes can be made thereto without departing from the spirit and scope of the present invention defined by the appended claims.

## Claims

1. A sound amplification box comprising:
a body comprising a predetermined resonance space therein and having a surface contacting an electronic device; and
a resonance hole formed in at least one surface of the body.

2. The sound amplification box of claim 1, wherein the body comprises:
an upper plate contacting the electronic device, wherein the electronic device is placed on the upper plate;
a lower plate spaced a predetermined distance from the upper plate and facing the upper plate; and
at least one side wall plate disposed at an edge of the upper plate and the lower plate.

3. The sound amplification box of claim 1 or 2, wherein the upper plate, the lower plate, and the at least one side wall plate are removably coupled to one another.

4. The sound amplification box of any of the claims 1 to 3, wherein joining parts are provided in predetermined regions of sides of the upper plate, the lower plate, and the side wall plate, and are coupled to one another.

5. The sound amplification box of any of the claims 1 to 4, wherein the joining parts comprise at least one of protrusion parts protruding from the sides, recess parts recessed in the sides, and uneven parts in which the protrusion parts and the recess parts are repeatedly formed.

6. The sound amplification box of any of the claims 1 to 5, wherein the side wall plate is provided in plurality such that the side wall plates extend from the lower plate and are foldable, and one of the side wall plates is foldable with the upper plate.

7. The sound amplification box of any of the claims 1 to 6, wherein the upper plate has a side on which the side wall plate is foldable, and another side opposite to the first side, and an outer plate is disposed on the second side and is foldable.

8. The sound amplification box of any of the claims 1 to 7, wherein the outer plate covers the side wall plate connected to a side of the lower plate, from an outside of the side wall plate, and a magnet is disposed in a predetermined region of a contact surface between the side wall plate and the outer plate.

9. The sound amplification box of any of the claims 1 to 8, wherein the side wall plate is provided in plurality such that the side wall plates extend from the lower plate and are foldable, and two of the side wall plates are foldable with the upper plate.

10. The sound amplification box of any one of any of the claims 1 to 9, wherein the resonance hole is formed in the lower plate.

11. The sound amplification box of any of the claims 1 to 10, further comprising a vibration transmission part in a predetermined region of the upper plate.

12. The sound amplification box of any of the claims 1 to 11, further comprising a support part in a predetermined region of the lower plate.

13. The sound amplification box of any one of any of the claims 1 to 12, wherein the upper plate is formed of a material that is different from materials for the lower plate and the side wall plates.

14. The sound amplification box of any of the claims 1 to 13, wherein at least the upper plate has a sandwich shape in which pulp is adhered to upper and lower parts of a polymer, wherein the polymer has a density ranging from approximately 10.0 kg/m² to 20.0 kg/m² and/or the pulp has a density ranging from approximately 100 kg/m² to 300 kg/m².
